# EUROPÄISCHE PATENTSCHRIFT

(11) **EP 2 825 715 B1**
(45) Veröffentlichungstag und Bekanntmachung des Hinweises auf die Patenterteilung: **27.07.2016**
(21) Anmeldenummer: 13714200.6
(22) Anmeldetag: 15.03.2013
(51) Int. Cl.: B23K 10/00, E21B 7/15

(54) **VERFAHREN UND VORRICHTUNG ZUM EINBRINGEN ODER ABTEUFEN VON HOHLRÄUMEN IM GEBIRGE**
METHOD AND APPARATUS FOR INTRODUCING OR SINKING CAVITIES IN ROCK
PROCÉDÉ ET DISPOSITIF POUR FONCER OU CREUSER DES CAVITÉS DANS DES MASSIFS ROCHEUX

(30) Priorität: 15.03.2012 DE 102012005044
(43) Veröffentlichungstag der Anmeldung: 21.01.2015
(73) Patentinhaber: Grotendorst, Josef, 46284 Dorsten (DE)
(72) Erfinder: Grotendorst, Josef, 46284 Dorsten (DE)
(74) Vertreter: Behrendt, Arne
(86) Internationale Anmeldenummer: PCT/EP2013/000800
(87) Internationale Veröffentlichungsnummer: WO 2013/135391

(56) Entgegenhaltungen:
- US-A- 3 467 206
- US-A1- 2011 120 771
- US-B2- 7 784 563

## Beschreibung

Die Erfindung betrifft ein Verfahren und eine Vorrichtung zum Einbringen oder Abteufen von Hohlräumen im Gebirge, bei welchem das an der Front des Hohlraumes anstehende Gestein thermisch aufgeschmolzen wird und mit Hilfe eines gasförmigen Fördermediums aus dem Hohlraum ausgetragen wird, wobei die zum Aufschmelzen des Gesteins benötigte Wärme von mindestens einem elektrischen Plasmaerzeuger bereit gestellt wird, der einem Vortriebskopf zugeordnet ist, der sich vorne an einer in den Hohlraum einschiebbaren Versorgungseinrichtung befindet. Unter Hohlräumen im Gebirge werden hier alle Arten von Bohrlöchern, Bohrschächten, Schächten, Strecken, Tunnel, Kammern etc. verstanden.

Ein derartiges Verfahren und die zugehörige Vorrichtung sind aus der US-PS 3,467,206 bekannt. Bei diesem nach dem Stand der Technik bekannten Verfahren ist vorne an dem Vortriebskopf ein um die Achse des Hohlraumes verdrehbare und mittels Rollen an der Front des Hohlraumes abgestützter Halter für einen Plasmabrenner vorgesehen, dessen Plasmastrahl winkelig gegen die Front und die Wandung des Hohlraumes gerichtet ist und beim Verdrehen des Halters sukzessive die Front des Hohlraumes abschmelzen soll. Das geschmolzene Gestein soll mittels eines gasförmigen Fördermediums abtransportiert werden. Hierzu ist ein entsprechend kräftiger Strom des gasförmigen Fördermittels gegen die Front des Hohlraumes gerichtet. Die Versorgung des Vortriebkopfes mit elektrischer Energie und dem gasförmigen Fördermittel erfolgt hier über ein biegsames Kabel, welches mit dem Vortriebskopf verbunden ist. Zur Beschleunigung des Aufschmelzens wird hier zusätzlich noch ein geeignetes pulverisiertes Flussmittel in die Schmelzzone eingeblasen.

Dieses vorbekannte Verfahren und die zugehörige Vorrichtung haben sich, soweit dies ermittelt werden konnte, in der Praxis nicht durchsetzen können. Wahrscheinlich ist es nicht möglich gewesen, in der Schmelzzone, die ständig mit großen Mengen des Fördermediums in Berührung kommt, die für das Aufschmelzen des Gesteins erforderliche Energiedichte zu erzeugen. Einer gezielten Erhöhung der Energiedichte stand unter anderem entgegen, dass im Bereich der Schmelzzone drehbewegliche Teile angeordnet sind, wie z.B. der drehbewegliche Träger des Plasmabrenners, die Stützrollen, deren Lager etc.

Es ist Aufgabe der Erfindung, das Verfahren und die Vorrichtung der eingangs genannten Art dahingehend weiterzubilden, dass im Bereich der Schmelzzone eine erheblich höhere Energiedichte hergestellt werden kann und auf drehbewegliche Teile im Bereich der Schmelzzone verzichtet werden kann.

Zur Lösung dieser Aufgabe schlägt die Erfindung ausgehend vom Verfahren der eingangs genannten Art vor,
- dass der Vortriebskopf vorne einen Hitzeschild aufweist, der die Front des Hohlraumes bis auf einen an der Peripherie verbleibenden Spalt abdeckt und mit der Front des Hohlraumes einen Staudruckraum bildet,
- dass der zwischen dem Hitzeschild und der Front des Hohlraumes befindliche Staudruckraum mit einem durch die Plasmaerzeuger erhitzten Teilstrom des gasförmigen Fördermediums beaufschlagt wird,
- und dass dieser Teilstrom des gasförmigen Fördermediums das an der Front des Hohlraumes anstehende Gestein aufschmilzt, ganz oder teilweise verdampft, über den peripheren Spalt aus dem Staudruckraum austrägt und in den Hauptstrom des gasförmigen Fördermediums einträgt.

Beim Verfahren gemäß der Erfindung ist es erstmals möglich, an der Front des Hohlraumes eine sehr große Energiedichte (Temperatur und Druck) herzustellen, die ausreicht, das anstehende Gestein über die gesamte Fläche der Front des Hohlraumes problemlos aufzuschmelzen und zusätzlich ganz oder teilweise zu verdampfen, um es anschließend mit Hilfe des gasförmigen Fördermediums abtransportieren zu können. Besonders vorteilhaft ist dabei, dass in der Schmelzzone unterhalb des Hitzeschildes keine beweglichen Teile benötigt werden.

Eine vorteilhafte Ausgestaltung des Verfahrens gemäß der Erfindung sieht vor, dass in dem Stauraum zwischen dem Hitzeschild und der Front des Hohlraumes ein Staudruck von mehr als 2 bar und eine Temperatur von mindestens 2000°C, vorzugsweise von mehr als 2900°C eingestellt werden. Die hohen Temperaturen garantieren einen schnellen Vortriebsfortschritt. Der Druck wird so hoch eingestellt, dass er ausreicht, das aufgeschmolzene und ganz oder teilweise verdampfte Gestein ausreichend schnell über den peripheren Spalt des Staudruckraumes auszutragen und in den Hauptförderstrom einzutragen.

Weiterhin ist vorgesehen, dass der Hitzeschild an seiner der Front des Hohlraumes abgewandten Seite gekühlt wird. Hierdurch wird sichergestellt, dass der der Hitzeschild an seiner Rückseite und insbesondere die dahinterliegenden Teile des Vortriebskopfes gegenüber Überhitzung und dadurch verursachte Zerstörungen geschützt werden.

Diese Kühlung des Hitzeschildes wird zweckmäßig mit einem flüssigen Kühlmedium durchgeführt, welches in ausreichender Menge in einem dem Vortriebskopf zugeordneten Druckgefäß bereitgehalten wird und erforderlichenfalls mittels geeigneter Wärmetauscher von dem zugeführten gasförmigen Fördermedium kühl gehalten wird.

Das gasförmige Fördermedium ist vorzugsweise Stickstoff. Stickstoff kann besonders kostengünstig bereitgestellt werden und verhält sich chemisch weitestgehend inert. Selbstverständlich können auch andere inerte Gase oder Gasgemische als Fördermedium verwendet werden, z. B. Argon oder andere geeignete Edelgase.

Um einen sicheren Abtransport des aufgeschmolzenen und/oder verdampften Gesteins aus dem Hohlraum zu gewährleisten, ist weiterhin vorgesehen, dass in dem Ringraum zwischen der Wand des Hohlraumes einerseits und dem Vortriebskopf bzw. der Vorschub- und Versorgungseinrichtung andererseits so viel gasförmiges Fördermedium eingeblasen wird, dass in diesem Ringraum überall eine Strömungsgeschwindigkeit von mehr als 10 m/s, vorzugsweise mehr als 20m/s erzeugt wird. Diese Geschwindigkeit reicht aus, das aufgeschmolzene und/oder verdampfte Gestein sicher aus dem Hohlraum auszutragen und zu verhindern, dass es sich beim Rekombinieren oder Kondensieren an den Wandungen des Hohlraumes, dem Vortriebskopf oder der Vortriebs- und Versorgungseinrichtung festsetzt.

Die Plasmaerzeuger arbeiten zweckmäßig mit einer elektrischen Leistung von 30 kW bis 1000 kW, die über die Versorgungseinrichtung zugeführt wird und außerhalb des Hohlraumes dem Wärmebedarf entsprechend gesteuert wird.

Zur Stabilisierung der Wandungen des Hohlraumes ist vorgesehen, dass das an der Peripherie des Stauraumes austretende erhitzte Fördermedium das umliegende Gestein anschmilzt (verglast). Die derart stabilisierten Wandungen brauchen dann gegebenenfalls nicht mehr durch einen Ausbau oder eine Verrohrung abgestützt zu werden.

Gegenstand der Erfindung ist weiterhin eine Vorrichtung zur Durchführung des oben erläuterten Verfahrens, mit einem an einer Vorschub- und Versorgungseinrichtung befestigten Vortriebskopf, der mit mindestens einem elektrischen Plasmaerzeuger zum Aufschmelzen und/oder Verdampfen des an der Front des Hohlraumes anstehenden Gesteins und mit Führungseinrichtungen für ein gasförmiges Fördermedium versehen ist, wobei sich diese Vorrichtung dadurch kennzeichnet, dass der Vortriebskopf vorne einen Hitzeschild aufweist, der die Front des Hohlraumes bis auf einen an der Peripherie verbleibenden Spalt abdeckt und mit der Front des Hohlraumes einen Staudruckraum bildet, der mit einem Teilstrom des gasförmigen Fördermediums beaufschlagt ist, der mit Hilfe von dem Hitzeschild zugeordneten elektrischen Plasmaerzeugern bis auf die Verdampfungstemperatur des Gesteins aufgeheizt ist und das aufgeschmolzene und zumindest teilweise verdampfte Gestein über den peripheren Spalt aus dem Stauraum austrägt und in den Hauptstrom des gasförmigen Fördermediums einträgt.

Eine erste mögliche Ausführungsform der Vorrichtung sieht vor, dass der Hitzeschild als kompakter Block aus einem hochwärmefesten Material, insbesondere aus Tantalcarbid besteht, vorne mit einer peripheren, den Druckraum umschließenden Wulst versehen ist und in seinem Volumen mehrere Plasmaerzeuger enthält, deren erhitztes Plasma über in dem Block angeordnete Plasmakanäle in den von der Wulst umfassten Staudruckraum sowie gegen die Front des Hohlraumes geleitet wird. Diese Ausführungsform des Hitzeschildes hat den besonderen Vorteil, dass die Plasmaerzeuger im Inneren des Hitzeschildes geschützt angeordnet sind und nicht unmittelbar mit dem aufschmelzenden und/oder verdampften Gestein in Berührung kommen. Der das aufgeschmolzene und verdampfte Gestein austragende Teilstrom des gasförmigen Fördermittels wird hier von dem über die Plasmaerzeuger zugeführten Plasmagas gebildet.

Eine alternative Ausführungsform der Vorrichtung gemäß der Erfindung sieht vor, dass der Hitzeschild, als nach unten offenes Gehäuse aus einem hochwärmefesten Material, insbesondere aus Tantalcarbid besteht, dessen offenen Vorderseite an der Front des Hohlraumes anliegt und dessen Rückwand mit Plasmaerzeugern bestückt ist, deren Plasmastrahl unmittelbar auf die Front des Hohlraumes gerichtet ist. Da hier für die Füllung des Innenraumes des Gehäuses mehr gasförmiges Fördermedium benötigt wird, wird zusätzlich zu dem von den Plasmabrennern zugeführten Gas noch ein Teilstrom des Fördermediums in den Staudruckraum eingeblasen.

Bei beiden oben diskutierten Ausführungsformen des Hitzeschildes ist der Hitzeschild an seiner Rückseite mit einer von einem Kühlmedium, z. B. Wasser, durchströmten Kühleinrichtung versehen.

Ebenso sind, um Überhitzungen zu vermeiden, die elektrischen Plasmaerzeuger von dem im Kreislauf geführten Kühlmedium, z. B. Wasser, gekühlt. Der Kühlmedium-Kreislauf wird seinerseits erforderlichenfalls über Wärmetauscher von dem frisch zugeführten Fördermedium gekühlt.

Eine besonders bevorzugte Ausgestaltung der Vorrichtung gemäß der Erfindung sieht vor, dass die Versorgungseinrichtung ein aus miteinander verschraubten Doppelrohrschüssen bestehendes Doppelrohrgestänge aufweist, mit einem Innenrohr aus elektrisch leitendem Material und einem Außenrohr aus elektrisch leitendem Material, welches das Innenrohr mit Abstand umgibt und gegen dieses elektrisch isoliert ist, wobei der freie Querschnitt des Innenrohres zur Zuführung des Fördermedium- Teilstroms für die Plasmaerzeugung, der Ringraum zwischen Innenrohr und Außenrohr der Zuführung des Fördermedium- Hauptstroms und die elektrisch leitenden Querschnitte von Innenrohr und Außenrohr als elektrische Leiter für die Stromversorgung und als Datenübertragungsleiter dienen. Ein derart ausgebildetes Doppelrohrgestänge ermöglicht es der Vorschub- und Versorgungseinrichtung auf einfache Weise, den Vortriebskopf mit allen erforderlichen Medien und mit Informationen zu versorgen.

Um die Intensität des an der Front des Hohlraums wirkenden Plasmas zu erhöhen, ist schließlich vorgesehen, dass jeweils zwischen zwei Plasmaerzeugern zusätzliche Anoden angeordnet sind, die in Richtung auf die Front des Hohlraums verschiebbar angeordnet sind. Auf diese Weise ist es möglich, die Plasma-Lichtbögen der Plasmaerzeuger bis unmittelbar an die Front des Hohlraums zu verlagern, wodurch sich der Wirkungsgrad der Anlage erheblich steigern lässt.

Ausführungsbeispiele von Vorrichtungen gemäß der Erfindung werden im Folgenden anhand der Zeichnungen näher erläutert. Es zeigen:
- Figur 1:: eine Prinzipskizze einer Abteufanlage gemäß der Erfindung;
- Figur 2:: einen axialen Schnitt durch den Vortriebskopf und den Hitzeschild in einer ersten Ausführungsform;
- Figur 3:: einen axialen Schnitt durch den Vortriebskopf und den Hitzeschild in einer zweiten Ausführungsform.
- Figur 4:: einen axialen Schnitt durch den Vortriebskopf, den Hitzeschild und die Versorgungseinrichtung in einer dritten Ausführungsform;
- Figur 5:: einen axialen Schnitt durch den Vortriebskopf, den Hitzeschild und die Versorgungseinrichtung in einer vierten Ausführungsform;
- Figur 6:: schematisch die Anordnung einer verschiebbaren Anode zwischen zwei Plasmaerzeugern.

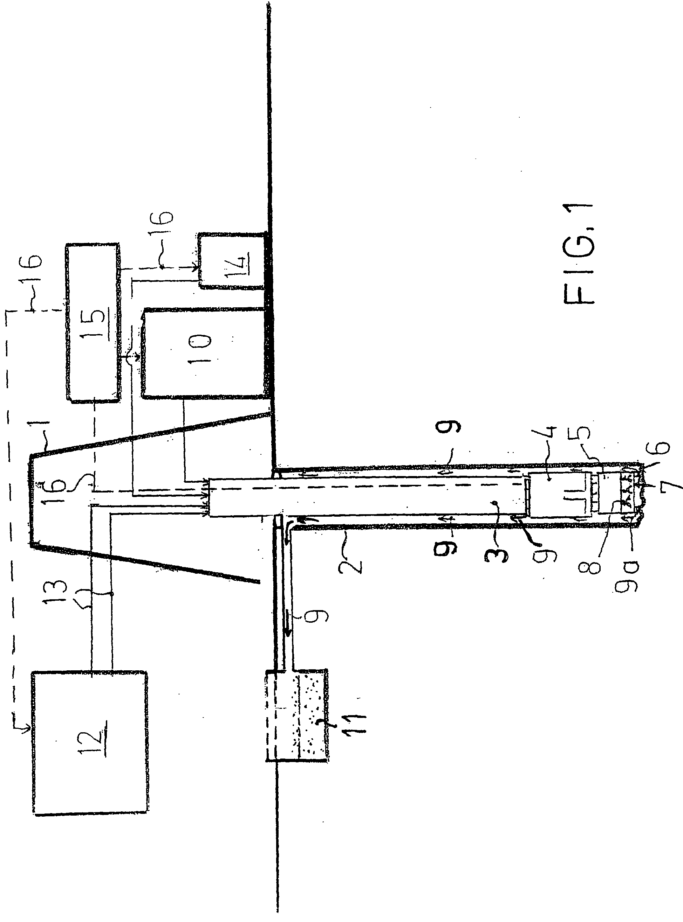

In Figur 1 ist ein an der Tagesoberfläche aufgestelltes Abteufgestell mit dem Bezugszeichen 1 bezeichnet. Dieses Abteufgestell 1 ist mit den üblichen Einrichtungen zum Einbringen einer Vorschub- und Versorgungseinrichtung 3 versehen, welche zum Vorschieben und zur Versorgung eines in dem herzustellenden Hohlraum 2 angeordneten Vortriebskopfes 4 dient. Der Vortriebskopf 4 ist an seiner der Front des Hohlraumes 2 zugewandten Seite mit einem Hitzeschild 5 versehen, der die Front des Hohlraumes 2 bis auf einen an der Peripherie verlaufenden Spalt 6 abdeckt und mit der Front des Hohlraumes 2 einen Staudruckraum 7 bildet.

In oder an dem Hitzeschild 5 sind mehrere elektrische Plasmaerzeuger 8 in Form von Plasmabrennern angeordnet, deren Wärme das an der Front des Hohlraumes 2 anstehende Gestein zum Aufschmelzen beziehungsweise Verdampfen bringt.

Das an der Front des Hohlraumes 2 aufgeschmolzene und/oder verdampfte Gestein wird mittels eines durch Pfeile 9 angedeuteten gasförmigen Fördermediums aus dem Hohlraumes 2 ausgetragen. Dieses gasförmige Fördermedium 9 ist Stickstoff, wird von einer Kompressoranlage 10 geliefert und über ein als Vorschub- und Versorgungseinrichtung 3 dienendes Gestänge dem Vortriebskopf 4 zugeführt. Das mit dem geschmolzenen und/oder verdampften Gestein beladenen Fördermedium 9 wird über dem Ringraum zwischen der Hohlraumwand und der Vorschub- und Versorgungseinrichtung 3 ausgetragen und in einer Abscheidevorrichtung 11 von dem Gestein getrennt.

Die Versorgung der elektrischen Plasmaerzeuger 8 mit elektrischer Energie erfolgt mittels eines Geleichstromgenerators 12 mit einer elektrischen Leistung von 30 kW bis 1000 kW über elektrische Leitungen 13 und die mit geeigneten elektrischen Übertragungsmitteln versehene Vortriebs- und Versorgungseinrichtung 3.

Der Hitzeschild 5 wird an seiner Rückseite mit Wasser gekühlt, welches in einem geeigneten Wasserbehälter 4a im Vortriebskopf 4 oder einem Vorratsbehälter 14 an der Tagesoberfläche bereitgehalten wird und dem Hitzeschild 4 über geeignete Leitungen und Ventile gesteuert zugeführt wird.

Mit dem gleichen Kühlmedium werden auch die Plasmaerzeuger 8 von der Rückseite her gekühlt, damit auch dort Überhitzungserscheinungen ausgeschlossen werden.

Die Versorgung mit Fördermedium 9, elektrischer Leistung und Kühlmedium wird von einem Rechner 15 gesteuert, der über entsprechende Datenleitungen 16 mit dem Gleichstromgenerator 12 und Steuerventilen für das Fördermedium 9 und den Stickstoff in Verbindung steht.

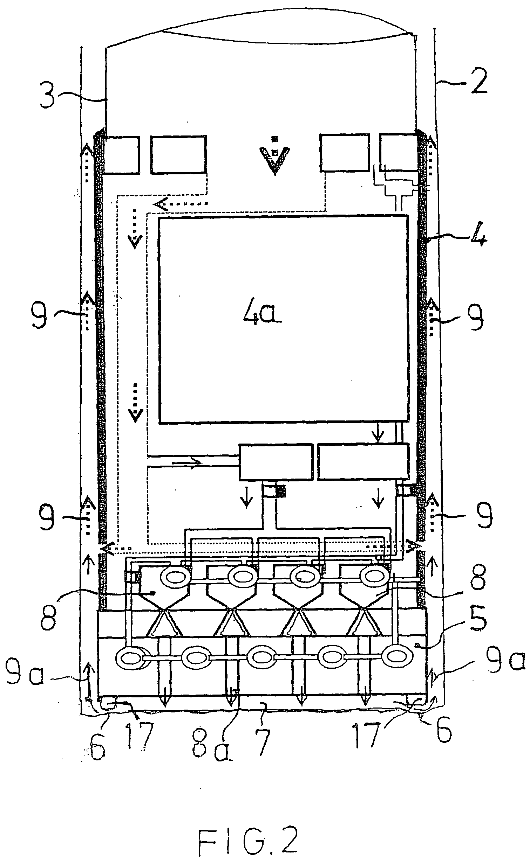

Beim Ausführungsbeispiel der Figur 2 besteht der Hitzeschild 4 aus einem kompakten Block aus extrem hitzebeständigem Material, zum Beispiel aus Tantalcarbid, und ist an seiner Unterseite mit einer umlaufenden Wulst 17 versehen, die den Staudruckraum 7 umschließt. Die Plasmaerzeuger 8 sind hier im Körper des kompakten Blocks aus Tantalcarbid angeordnet und über gegen die Front des Hohlraumes 2 gerichtete Plasmakanäle 8a mit dem Staudruckraum 7 verbunden. Das über die Plasmakanäle 8a zugeführte Plasmagas (Stickstoff) dient zugleich als Fördermedium zum Austragen des geschmolzenen und/oder verdampften Gestein aus dem Staudruckraum 7 über den an der Peripherie des Staudruckraumes 7 verbleibenden Spalt 6 zwischen der Wulst 17 und der Front des Hohlraumes 2. Der hier durchtretende Teilstrom 9a des Fördermediums 9 schmilzt zugleich die Wandungen des Hohlraumes 2 derart an, dass diese verglasen und dadurch stabilisiert werden. Infolgedessen brauchen die Wandungen dieses Hohlraumes 2 im Normalfall nicht mit einem Ausbau oder einer Verrohrung abgestützt zu werden.

Die Kühlung der Rückseite des als Hitzeschildes 4 dienenden Blockes erfolgt durch Wasser, welches in dem Wasserbehälter 4a im Vortriebskopf 4 bereitgehalten wird. Dieses Wasser kann von Zeit zu Zeit aus dem Übertage angeordneten Vorratsbehälter 14 ergänzt werden. Ähnlich wie der Hitzeschild 4 werden auch die in dem Hitzeschild 4 enthaltenen Plasmabrenner 8 mit Wasser gekühlt.

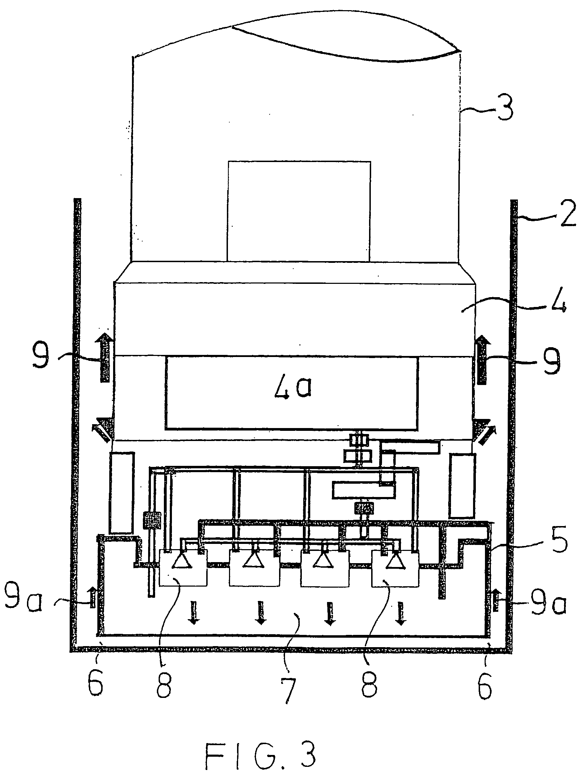

Beim Ausführungsbeispiel gemäß Figur 3 besteht der Hitzeschild 5 aus einem nach vorne offenen Gehäuse aus einem hoch wärmefesten Material, insbesondere aus Tantalcarbid, dessen offene Vorderseite an der Front des Hohlraumes 2 anliegt und dessen Rückwand mit Plasmaerzeuger 8 bestückt ist, deren Plasmastrahle unmittelbar gegen die Front des Hohlraumes 2 gerichtet sind. Der Staudruckraum 7 wird hier vom Innenraum des Gehäuses gebildet.

Auch hier wird - ebenso wie beim Ausführungsbeispiel gemäß Figur 3 - das an der Front des Hohlraumes 2 anstehende Gestein aufgeschmolzen und zumindest teilweise verdampft, mittels eines Teilstroms 9a des Fördermediums 9 über den an der Peripherie des Staudruckraumes 7 befindlichen Spalt 6 ausgetragen und in den Hauptstrom des Fördermediums 9 eingetragen. Dabei werden auch hier die Wandungen des Hohlraumes 2 angeschmolzen und auf diese Weise stabilisiert.

Schließlich sind auch hier die Plasmaerzeuger 8 und der Hitzeschild 5 von der Rückseite des Hitzeschildes 5 her mit Wasser gekühlt, welches in dem Wasserbehälter 4a bereit gehalten wird.

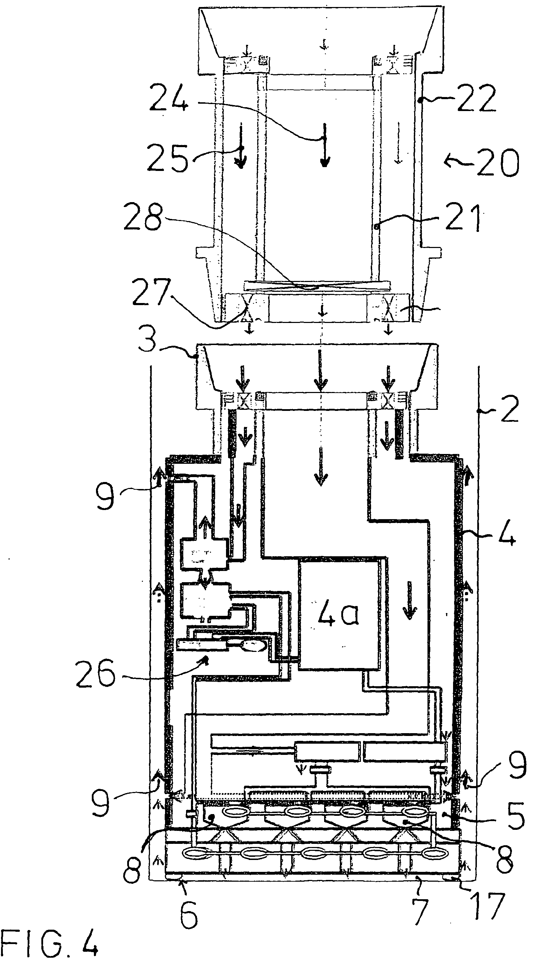

Die in Figur 4 dargestellte Vorrichtung entspricht weitestgehend der Vorrichtung gemäß Figur 2, so dass für die einander entsprechenden Teile die gleichen Bezugsziffern verwendet werden konnten.

Zusätzlich sind in Figur 4 insbesondere Einzelheiten der Vorschub- und Versorgungseinrichtung dargestellt. Die Vorschub- und Versorgungseinrichtung weist ein Doppelrohrgestänge auf, welches aus einer Vielzahl von miteinander verschraubten Rohrschüssen 20 besteht. Jeder Rohrschuss 20 weist ein metallisches Innenrohr 21 und ein metallisches Außenrohr 22 auf, welches das Innenrohr 21 mit Abstand umgibt. Das Innenrohr 21 und das Außenrohr 22 sind durch Isolierungsmuffen 23 elektrisch voneinander isoliert, so dass sie als metallische Stromleiter verwendet werden können, der den Vortriebskopf mit elektrischer Energie versorgt. Zugleich können die beiden gegeneinander isolierten Rohre als elektrische Leiter für die Datenübertragung verwendet werden.

Der freie Querschnitt des Innenrohres 21 dient als Zuführungskanal für den durch den Plasmaerzeuger 8 geführten Teilstrom 24 des Fördermediums. Durch den Ringraum zwischen dem Innenrohr 21 und dem Außenrohr 22 wird demgegenüber der zum Abfördern des geschmolzenen und verdampften Gesteins dienende Teilstrom 25 des Fördergases geführt. Von diesem Teilstrom 25 wird innerhalb des Vortriebskopfes 4 ein Teilstrom abgezweigt, der durch Wärmetauscher 26 geführt wird, mit welchen das Kühlwasser in dem Kühlwasserbehälter 4a und dem zugehörigen Kühlkreislauf kühl gehalten wird. Zu diesem Zweck kann es zweckmäßig sein, den Teilstrom 25 vor dem Einleiten in den Ringraum vorzukühlen, beispielsweise dadurch, dass zusätzlich flüssiger Stickstoff eingeleitet wird. Die Teilströme 24 und 25 können ggf. durch Ventile 27 und 28 gesteuert werden, die sich an den Enden der Rohrschüsse befinden.

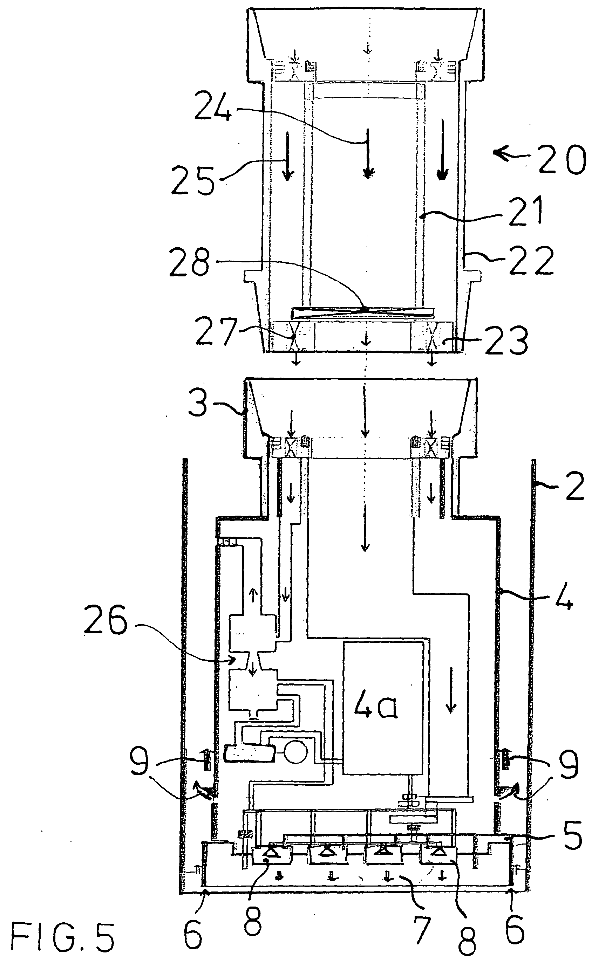

Die in Figur 5 dargestellte Vorrichtung entspricht weitestgehend der Vorrichtung gemäß Figur 3, so dass auch hier für einander entsprechenden Teile die gleichen Bezugsziffern verwendet werden konnten.

Zusätzlich sind in Figur 5 die Einzelheiten der Vorschub- und Versorgungseinrichtung dargestellt, die im Prinzip ebenso aufgebaut sind, wie anhand von Figur 4 dargestellt und erläutert worden ist. Auch insoweit kann auf die obigen Ausführungen verwiesen werden.

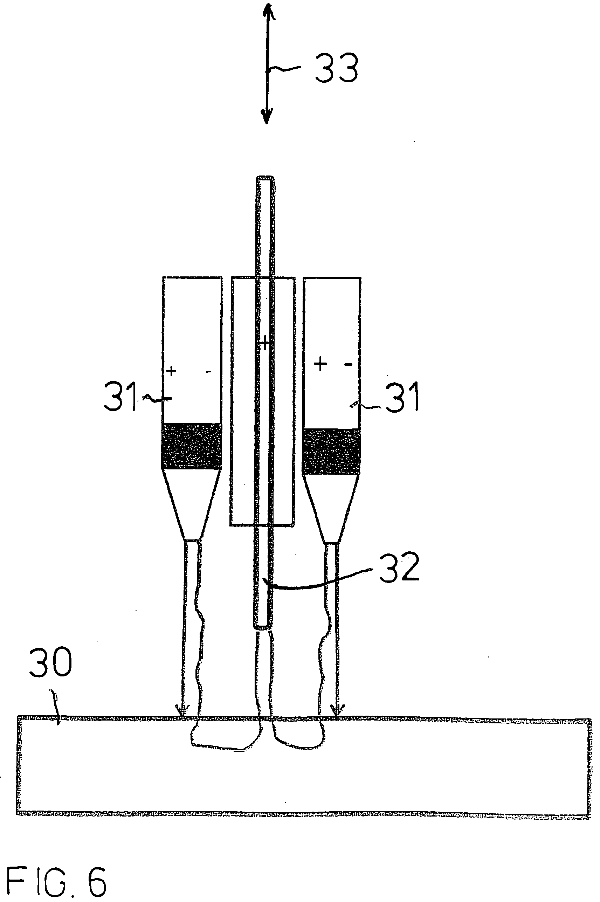

Die Figur 6 zeigt schließlich eine besondere Anordnung von zwei Plasmaerzeugern 31 oberhalb einer abzuschmelzenden Gesteinsfront 30. Diesen beiden Plasmaerzeugern 31 ist eine verschiebbare Anode zugeordnet, die, wie mit dem Doppelpfeil 33 angedeutet worden ist, gezielt auf eine enge Distanz zur Gesteinsfront 30 eingestellt werden kann. Hierdurch ergeben sich zwischen den Plasmaerzeugern 31 und dieser Anode 32 zwei sehr intensiv wirkende Lichtbögen, die das Abschmelzen und Verdampfen der Gesteinsfront 30 erheblich beschleunigen können, weil sich die Lichtbögen nahe an dieser Gesteinsfront 30 befinden.

Die in Figur 6 dargestellte besondere Anordnung der Plasmaerzeuger und der verschiebbaren Anode kann bei allen zuvor geschilderten Ausführungsformen des Vortriebskopfes verwendet werden.

## Patentansprüche

1. Verfahren zum Einbringen oder Abteufen von Hohlräumen (2) im Gebirge, bei welchem das an der Front des Hohlraumes (2) anstehende Gestein thermisch aufgeschmolzen wird und mit Hilfe eines gasförmigen Fördermediums (9) aus dem Hohlraum (2) ausgetragen wird, wobei die zum Aufschmelzen des Gesteins benötigte Wärme von mindestens einem elektrischen Plasmaerzeuger (8) bereitgestellt wird, der einem Vortriebskopf (4) zugeordnet ist, der sich vorne an einer in den Hohlraum (2) einschiebbaren Vorschub- und Versorgungseinrichtung (3) befindet,
**dadurch gekennzeichnet,**
- **dass** der Vortriebskopf (4) vorne einen Hitzeschild (5) aufweist, der die Front des Hohlraumes (2) bis auf einen an der Peripherie befindlichen Spalt (6) abdeckt und mit der Front des Hohlraumes (2) einen Staudruckraum (7) bildet,
- **dass** der zwischen dem Hitzeschild (5) und der Front des Hohlraumes (2) befindliche Staudruckraum (7) mit einem durch die Plasmaerzeuger (8) erhitzten Teilstrom (9a) des gasförmigen Fördermediums (9) beaufschlagt wird,
- und **dass** dieser Teilstrom (9a) des gasförmigen Fördermediums (9), das an der Front des Hohlraumes (2) anstehende Gestein aufschmilzt, ganz oder teilweise verdampft, über den peripheren Spalt (6) aus dem Staudruckraum (7) austrägt und in den Hauptstrom des gasförmigen Fördermediums (9) einträgt.

2. Verfahren nach Anspruch 1, **dadurch gekennzeichnet, dass** in dem Staudruckraum (7) zwischen dem Hitzeschild (5) und der Front des Hohlraumes (2) ein Staudruck von mehr als 2 bar und eine Temperatur von mindestens 2000°C, vorzugsweise von mehr als 2900°C eingestellt wird.

3. Verfahren nach den Ansprüchen 1 und 2, **dadurch gekennzeichnet, dass** der Hitzeschild (5) an seiner der Front des Hohlraumes (2) abgewandten Seite gekühlt wird.

4. Verfahren nach Anspruch 3, **dadurch gekennzeichnet, dass** die Kühlung des Hitzeschilds (5) mit einer Kühlflüssigkeit, insbesondere mit Wasser erfolgt.

5. Verfahren nach Anspruch 1, **dadurch gekennzeichnet, dass** für die Erzeugung des Plasmas und als gasförmiges Fördermedium Stickstoff verwendet wird.

6. Verfahren nach Anspruch 1, **dadurch gekennzeichnet, dass** in dem Ringraum zwischen der Wand des Hohlraumes (2) einerseits und dem Vortriebskopf (4) bzw. dessen Vorschub- und Versorgungseinrichtung (3) andererseits so viel gasförmiges Fördermedium (9) eingeblasen wird, dass in diesem Ringraum überall eine Strömungsgeschwindigkeit mehr als 10 m/Sek., vorzugsweise mehr als 20 m/Sek. erzeugt wird.

7. Verfahren nach einem der Ansprüche 1 bis 6, **dadurch gekennzeichnet, dass** die Plasmaerzeuger (8) mit einer elektrischen Leistung von 30 bis 1000 kW arbeiten, die über die Vorschub- und Versorgungseinrichtung (3) zugeführt wird und außerhalb des Hohlraumes (2) dem Wärmebedarf entsprechend gesteuert wird.

8. Verfahren nach Anspruch 1, **dadurch gekennzeichnet, dass** das an der Peripherie des Staudruckraums (7) austretende erhitzte Fördermedium (9) das umliegend anstehende Gestein anschmilzt (verglast) und auf diese Weise die Wandung des Hohlraumes (2) stabilisiert.

9. Vorrichtung zur Durchführung des Verfahrens nach Anspruch 1, mit einem an einer Versorgungseinrichtung (3) befestigten Vortriebskopf (4), der mindestens einen elektrischen Plasmaerzeuger (8) zum Aufschmelzen und Verdampfen des an der Front des Hohlraumes (2) anstehenden Gesteins und Führungseinrichtungen für ein gasförmiges Fördermedium (9) aufweist, **dadurch gekennzeichnet, dass** der Vortriebskopf (4) vorne mit einem Hitzeschild (5) versehen ist, der die Front des Hohlraumes (2) bis auf einen an der Peripherie verbleibenden Spalt (6) abdeckt und mit der Front des Hohlraumes (2) einen Staudruckraum (7) bildet, der mit einem Teilstrom des gasförmigen Fördermediums (9) beaufschlagt ist, mit Hilfe von dem Hitzeschild zugeordneten elektrischen Plasmaerzeuger auf die Verdampfungstemperatur des Gesteins aufgeheizt ist und das aufgeschmolzene und ganz oder teilweise verdampfte Gestein über den peripheren Spalt (6) aus dem Stauraum (7) austrägt und in den Hauptstrom des gasförmigen Fördermediums (9) einträgt.

10. Vorrichtung nach Anspruch 9, **dadurch gekennzeichnet, dass** der Hitzeschild (5) als kompakter Block aus einem hochschmelzenden Material, insbesondere aus Tantalcarbid ausgebildet ist, der vorne mit einer peripheren, den Staudruckraum (7) umschließenden Wulst (17) versehen ist und in seinem Volumen mehrere Plasmaerzeuger (8) enthält, deren erhitztes Plasma über in dem kompakten Block angeordnete Plasmakanäle (8a) in den von der Wulst (17) umfassten Staudruckraum (7) sowie gegen die Front des Hohlraumes (2) geleitet wird.

11. Vorrichtung nach Anspruch 9, **dadurch gekennzeichnet, dass** der Hitzeschild (5) als nach vorne offenes Gehäuse aus einem hochwärmefesten Material, insbesondere aus Tantalcarbid ausgebildet ist, dessen offene Vorderseite an der Front des Hohlraumes (2) anliegt und dessen Rückwand mit elektrischen Plasmaerzeuger (8) bestückt ist, deren Plasmastrahle unmittelbar auf die Front des Hohlraumes (2) gerichtet sind.

12. Vorrichtung nach Anspruch 9, **dadurch gekennzeichnet, dass** die Vorschub- und Versorgungseinrichtung (3) ein aus miteinander verschraubten Doppelrohrschüssen (20) bestehendes Doppelrohrgestänge aufweist, mit einem Innenrohr (21) aus elektrisch leitendem Material und einem Außenrohr (22) aus elektrisch leitendem Material, welches das Innenrohr (21) mit Abstand umgibt und gegen dieses elektrisch isoliert ist, wobei
- der freie Querschnitt des Innenrohres (21) zur Zuführung des Fördermedium- Teilstroms für die Plasmaerzeugung,
- der Ringraum zwischen Innenrohr (21) und Außenrohr (22) der Zuführung des Fördermedium- Hauptstroms,
- und die elektrisch leitenden Querschnitte von Innenrohr (21) und Außenrohr (22) als elektrische Leiter für die Stromversorgung und als Datenübertragungsleiter dienen.

13. Vorrichtung nach Anspruch 9, **gekennzeichnet durch**, jeweils zwischen zwei Plasmaerzeugern (31) angeordnete zusätzliche Anoden (32), die in Richtung auf die Front (30) des Hohlraums (2) verschiebbar angeordnet sind.

## Claims

1. Method for introducing or sinking cavities (2) in rock, in which the bedrock situated at the face of the cavity (2) is thermally melted and is conveyed out of the cavity (2) using a gaseous conveying medium (9), wherein the heat required for melting the rock is provided by at least one electric plasma generator (8), which is assigned to an advancing head (4) that is situated at the front in an advancing and supply device (3) that can be pushed into the cavity (2), **characterized in that**
- the advancing head (4) has a heat shield (5) at the front, which shield covers the face of the cavity (2) except for a gap (6) that is situated on the periphery and forms a dynamic pressure space (7) with the face of the cavity (2),
- that the dynamic pressure space (7) situated between the heat shield (5) and the face of the cavity (2) is impacted by a partial stream (9a) of the gaseous conveying medium (9) heated by the plasma generator (8),
- and that this partial stream (9a) of the gaseous conveying medium (9) melts the bedrock situated at the face of the cavity (2), evaporates it in whole or in part, discharges it from the dynamic pressure space (7) by way of the peripheral gap (6), and introduces it into the main stream of the gaseous conveying medium (9).

2. Method according to claim 1, **characterized in that** a dynamic pressure of more than 2 bar and a temperature of at least 2000°C, preferably of more than 2900°C, are set in the dynamic pressure space (7) between the heat shield (5) and the face of the cavity (2).

3. Method according to claims 1 and 2, **characterized in that** the heat shield (5) is cooled on its side facing away from the face of the cavity (2).

4. Method according to claim 3, **characterized in that** cooling of the heat shield (5) takes place with a cooling fluid, particularly with water.

5. Method according to claim 1, **characterized in that** nitrogen is used for generating the plasma and as a gaseous conveying medium.

6. Method according to claim 1, **characterized in that** such an amount of gaseous conveying medium (9) is blown into the ring space between the wall of the cavity (2), on the one hand, and the advancing head (4) or its advancing and supply device (3), on the other hand, that a flow velocity of more than 10 m/sec., preferably more than 20 m/sec. is generated everywhere in this ring space.

7. Method according to one of claims 1 to 6, **characterized in that** the plasma generators (8) work at an electric power of 30 kW to 1000 kW, which is supplied by way of the advancing and supply device (3) and is controlled in accordance with the heat requirement, outside of the cavity (2).

8. Method according to claim 1, **characterized in that** the heated conveying medium (9) that exits at the periphery of the dynamic pressure space (7) starts to melt (vitrifies) the surrounding bedrock, and in this way stabilizes the walls.

9. Apparatus for carrying out the method according to claim 1, having an advancing head (4) attached to a supply device (3), which head has at least one electric plasma generator (8) for melting and evaporating the bedrock situated at the face of the cavity (2), and guide devices for a gaseous conveying medium (9), **characterized in that** the advancing head (4) has a heat shield (5) at the front, which shield covers the face of the cavity (2) except for a gap (6) that remains at the periphery and forms a dynamic pressure space (7) with the face of the cavity (2), which space is impacted by a partial stream of the gaseous conveying medium (9) that is heated to the evaporation temperature of the rock, using electric plasma generators assigned to the heat shield, and discharges the molten and entirely or partially evaporated rock out of the dynamic pressure space (7), by way of the peripheral gap (6), and introduces it into the main stream of the gaseous conveying medium (9).

10. Apparatus according to claim 9, **characterized in that** the heat shield (5) is formed as a compact block consisting of a material that melts at a high temperature, particularly of tantalum carbide, which is provided at the front with a peripheral bead (17) that encloses the dynamic pressure space (7), and contains multiple plasma generators (8) in its volume, the heated plasma of which is guided into the dynamic pressure space (7) enclosed by the bead (17) and against the face of the cavity (2), by way of plasma channels (8a) disposed in the compact block.

11. Apparatus according to claim 9, **characterized in that** the heat shield (5) is formed as a housing that is open toward the front, composed of a material resistant to high temperatures, particularly of tantalum carbide, the open front side of which housing lies against the face of the cavity (2), and the back wall of which housing is equipped with plasma generators (8), the plasma jets of which are directed directly onto the face of the cavity (2).

12. Apparatus according to claim 9, **characterized in that** the advancing and supply device (3) has a double-pipe linkage that consists of double-pipe sections (20) that are screwed together, having an inner pipe (21) composed of electrically conductive material and an outer pipe (22) composed of electrically conductive material, which encloses the inner pipe (21) at a distance and is electrically insulated relative to it, wherein
- the free cross-section of the inner pipe (21) serves for supplying the partial stream of the conveying medium for plasma generation,
- the ring space between inner pipe (21) and outer pipe (22) serves for supplying the main stream of the conveying medium,
- and the electrically conductive cross-sections of inner pipe (21) and outer pipe (22) serve as electric conductors for the power supply and as data transmission conductors.

13. Apparatus according to claim 9, **characterized in that** additional anodes (32) are disposed between two plasma generators (31), in each instance, which are disposed to be displaceable in the direction toward the face (30) of the cavity (2).

## Revendications

1. Procédé pour foncer ou creuser des cavités (2) dans des massifs rocheux, dans lequel la roche présente au front de la cavité (2) est fondue thermiquement et est enlevée de la cavité (2) à l'aide d'un milieu de refoulement gazeux (9), la chaleur nécessaire pour fondre la roche étant fournie par au moins un générateur de plasma électrique (8) qui est associé à une tête d'avance (4) qui se trouve à l'avant au niveau d'un dispositif d'avance et d'alimentation (3) pouvant être enfoncé dans la cavité (2),
**caractérisé en ce que**
- la tête d'avance (4) présente à l'avant un bouclier thermique (5) qui recouvre le front de la cavité (2) à l'exception d'une fente (6) se trouvant au niveau de la périphérie et qui forme avec le front de la cavité (2) un espace de retenue de pression (7),
- l'espace de retenue de pression (7) se trouvant entre le bouclier thermique (5) et le front de la cavité (2) est sollicité avec un courant partiel (9a) du milieu de refoulement gazeux (9) chauffé par le générateur de plasma (8),
- et ce courant partiel (9a) du milieu de refoulement gazeux (9), qui fait fondre la roche présente au front de la cavité (2), s'évapore complètement ou partiellement, s'échappe par le biais de la fente périphérique (6) hors de l'espace de retenue de pression (7) et entre dans le courant principal du milieu de refoulement gazeux (9).

2. Procédé selon la revendication 1, **caractérisé en ce que** dans l'espace de retenue de pression (7) entre le bouclier thermique (5) et le front de la cavité (2) est ajustée une pression de retenue supérieure à 2 bars et une température d'au moins 2000° C, de préférence supérieure à 2900° C.

3. Procédé selon les revendications 1 et 2, **caractérisé en ce que** le bouclier thermique (5) est refroidi au niveau de son côté opposé au front de la cavité (2).

4. Procédé selon la revendication 3, **caractérisé en ce que** le refroidissement du bouclier thermique (5) s'effectue avec un liquide de refroidissement, en particulier avec de l'eau.

5. Procédé selon la revendication 1, **caractérisé en ce que** l'on utilise de l'azote pour générer le plasma et en tant que milieu de refoulement gazeux.

6. Procédé selon la revendication 1, **caractérisé en ce que** dans l'espace annulaire entre la paroi de la cavité (2) d'une part et la tête d'avance (4) ou son dispositif d'avance et d'alimentation (3) d'autre part est soufflé tant de milieu de refoulement gazeux (9) qu'une vitesse d'écoulement globale supérieure à 10 m/s, de préférence supérieure à 20 m/s soit générée dans cet espace annulaire.

7. Procédé selon l'une quelconque des revendications 1 à 6, **caractérisé en ce que** les générateurs de plasma (8) fonctionnent avec une puissance électrique de 30 à 1000 kW qui est acheminée par le biais du dispositif d'avance et d'alimentation (3) et qui est commandée à l'extérieur de la cavité (2) en fonction des besoins en chaleur.

8. Procédé selon la revendication 1, **caractérisé en ce que** le fluide de refoulement chauffé (9) sortant au niveau de la périphérie de l'espace de retenue de pression (7) fait fondre (vitrifie) la roche présente autour et stabilise de ce fait la paroi de la cavité (2).

9. Dispositif pour mettre en oeuvre le procédé selon la revendication 1, comprenant une tête d'avance (4) fixée à un dispositif d'alimentation (3), qui présente au moins un générateur de plasma électrique (8) pour faire fondre et évaporer la roche présente au front de la cavité (2) et des dispositifs de guidage pour un milieu de refoulement gazeux (9), **caractérisé en ce que** la tête d'avance (4) est pourvue à l'avant d'un bouclier thermique (5) qui recouvre le front de la cavité (2) à l'exception d'une fente (6) subsistant au niveau de la périphérie et forme avec le front de la cavité (2) un espace de retenue de pression (7) qui est sollicité avec un flux partiel du milieu de refoulement gazeux (9), qui est chauffé à l'aide du générateur de plasma électrique associé au bouclier thermique à la température d'évaporation de la roche et la roche fondue et évaporée complètement ou partiellement sort par le biais de la fente périphérique (6) hors de l'espace de retenue (7) et pénètre dans le flux principal du milieu de refoulement gazeux (9).

10. Dispositif selon la revendication 9, **caractérisé en ce que** le bouclier thermique (5) est réalisé sous forme de bloc compact constitué d'un matériau à haut point de fusion, en particulier de carbure de tantale, qui est pourvu à l'avant d'un bourrelet périphérique (17) entourant l'espace de retenue de pression (7) et qui contient dans son volume plusieurs générateurs de plasma (8) dont le plasma chauffé est conduit par le biais de canaux de plasma (8a) disposés dans le bloc compact dans l'espace de retenue de pression (7) entouré par le bourrelet (17) et contre le front de la cavité (2).

11. Dispositif selon la revendication 9, **caractérisé en ce que** le bouclier thermique (5) est réalisé sous forme de boîtier ouvert vers l'avant constitué d'un matériau hautement résistant à la chaleur, en particulier de carbure de tantale, dont le côté avant ouvert s'applique contre le front de la cavité (2) et dont la paroi arrière est munie de générateurs de plasma électriques (8), dont les jets de plasma sont orientés directement vers le front de la cavité (2).

12. Dispositif selon la revendication 9, **caractérisé en ce que** le dispositif d'avance et d'alimentation (3) présente une tringlerie à tuyau à double paroi constituée de sections de tuyau à double paroi vissées les unes aux autres (20), avec un tuyau intérieur (21) en matériau électriquement conducteur et un tuyau extérieur (22) en matériau électriquement conducteur qui entoure le tuyau intérieur (21) à distance de celui-ci et qui est isolé électriquement vis-à-vis de celui-ci,
- la section transversale libre du tuyau intérieur (21) servant à acheminer le flux partiel de milieu de refoulement pour la génération de plasma,
- l'espace annulaire entre le tuyau intérieur (21) et le tuyau extérieur (22) servant à l'alimentation du flux principal de fluide de refoulement,
- et les sections transversales électriquement conductrices du tuyau intérieur (21) et du tuyau extérieur (22) servant de conducteur électrique pour l'alimentation en courant et servant de conducteur de transmission des données.

13. Dispositif selon la revendication 9, **caractérisé par** des anodes supplémentaires (32) disposées à chaque fois entre deux générateurs de plasma (31), lesquelles sont disposées de manière déplaçable dans la direction du front (30) de la cavité (2).
